(19) Europäisches Patentamt
European Patent Office
Office européen des brevets

(11) EP 3 943 519 B1

(12) **EUROPEAN PATENT SPECIFICATION**

(45) Date of publication and mention of the grant of the patent:
**08.05.2024 Bulletin 2024/19**

(21) Application number: **20778930.6**

(22) Date of filing: **19.03.2020**

(51) International Patent Classification (IPC):
***C08F 220/14*** (2006.01) ***C08F 220/44*** (2006.01)
***C08F 226/02*** (2006.01) ***C09D 139/00*** (2006.01)
***C09D 133/20*** (2006.01) ***C09D 133/12*** (2006.01)

(52) Cooperative Patent Classification (CPC):
(C-Sets available)
**C08F 226/02; C08F 220/14; C08F 220/44; C09D 133/12; C09D 133/20; C09D 139/00** (Cont.)

(86) International application number:
**PCT/JP2020/012232**

(87) International publication number:
**WO 2020/196234 (01.10.2020 Gazette 2020/40)**

(54) **METHOD FOR PRODUCING AQUEOUS SOLUTION OF N-VINYL CARBOXYLIC ACID AMIDE COPOLYMER**

VERFAHREN ZUR HERSTELLUNG EINER WÄSSRIGEN LÖSUNG EINES N-VINYLCARBONSÄUREAMID-COPOLYMERS

PROCÉDÉ DE PRODUCTION D’UNE SOLUTION AQUEUSE D’UN COPOLYMÈRE D’AMIDE D’ACIDE N-VINYLCARBOXYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2019 JP 2019054368**

(43) Date of publication of application:
**26.01.2022 Bulletin 2022/04**

(73) Proprietor: **Resonac Corporation**
**Tokyo (JP)**

(72) Inventors:
- **SUGAWARA, Atsushi**
  **Tokyo 105-8518 (JP)**
- **KONISHI, Jun**
  **Tokyo 105-8518 (JP)**

(74) Representative: **Strehl Schübel-Hopf & Partner**
**Maximilianstrasse 54**
**80538 München (DE)**

(56) References cited:
**EP-A2- 0 757 998**
**JP-A- H01 163 208**
**JP-A- H01 163 208**
**JP-A- H05 294 358**
**JP-A- H08 269 111**
**JP-A- H08 311 385**
**JP-A- H09 296 013**
**JP-A- 2004 323 548**
**JP-A- 2004 331 693**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 943 519 B1

(52) Cooperative Patent Classification (CPC): (Cont.)

C-Sets
C08F 220/14, C08F 226/02;
C08F 220/44, C08F 226/02;
C08F 226/02, C08F 220/14;
C08F 226/02, C08F 220/44

## Description

### Technical Field

The present invention relates to a method for producing an aqueous solution of an N-vinyl carboxylic acid amide copolymer, which has high viscosity, high aqueous solution thickening properties, hydrophobicity as well as hydrophilicity, and excellent dispersibility.

### Background Art

N-vinyl carboxylic acid amides are amphiphilic monomers. Polymers thereof also have amphiphilicity, but have been desired to have increased affinity for hydrophobic materials. With respect to polymers obtained by copolymerizing an N-vinyl carboxylic acid amide with another hydrophobic monomer, the monomers polymerize in a blocked state due to different polymerizability between the monomers, and intended aqueous solution thickening properties have not been obtained.

Conventionally, organic solvents have been frequently used as coating liquids in various industries. Due to environmental considerations, however, conversion of organic solvents to aqueous solvents has been progressing. In addition, when a resin material surface is coated, coating liquids also having hydrophobicity have been desired from the viewpoint of affinity for resin.

Patent Literature 1 below discloses a non-fluidizing agent comprising a non-fluidizing agent for a deliquescent inorganic salt-based dehumidifier which is substantially a copolymer of (meth)acrylonitrile and a nonionic hydrophilic monomer, or a cross-linked material thereof, a deliquescent inorganic salt, and another macromolecular non-fluidizing agent.

Patent Literature 2 below discloses a copolymer comprising: at least a monomer selected from a group consisting of unsaturated carboxylic acid monomers, salts of unsaturated carboxylic acid monomers, unsaturated carboxylate monomers, vinyl ester monomers, and unsaturated nitrile monomers, and N-vinylacetamide, the copolymer having a ratio of the number of moles of constituent units derived from N-vinylacetamide to the number of moles of constituent units other than the constituent units derived from N-vinylacetamide of 1.00 : 0.010 to 1.00 : 0.250.

Patent Literature 3 below discloses acrylic fiber characterized by being produced by copolymerizing 0.1 to 15 mol % of N-vinylformamide and/or N-vinylacetamide to 99.9 to 85 mol % of acrylonitrile, and subjecting a solution of the obtained copolymer to spinning in a solvent in which the copolymer solidifies.

Patent Literature 4 below discloses a cationic macromolecular flocculant comprising a water-soluble polymer having an amino group in a molecule, which is obtained by partial saponification of a copolymer of N-vinylacetamide and acrylonitrile.

Patent Literature 5 below discloses an additive for ink comprising one or more water-soluble (co)polymers comprising 100 to 50 % by mass of an N-vinyl carboxylic acid amide and 0 to 50 % by mass of a monomer which is copolymerizable with the N-vinyl carboxylic acid amide, and one or more hydrophilic polymers exhibiting a pseudoplastic flow characteristic in a form of an aqueous solution. Patent Literature 6 discloses an aqueous solution of a cationic water-soluble polymer comprising an N-vinyl carboxylic acid amide monomer which is easy to handle and applicable as it is as a flocculant or chemicals for paper.

### Citation List

#### Patent Literature

Patent Literature 1: JP 3180659 B2
Patent Literature 2: WO 2016/181993 A1
Patent Literature 3: JP 3144087 B2
Patent Literature 4: JP 2798736 B2
Patent Literature 5: JP H08-311385 A Patent Literature 6: JP H09-296013 A

### Summary of Invention

#### Technical Problem

Patent Literature 1 to Patent Literature 5 do not refer to increased affinity for hydrophobic materials. Moreover,

conventionally known aqueous solutions of N-vinyl carboxylic acid amide copolymers are limited to those having a low viscosity (560 cps) as described, for example, in Production Example 1 disclosed in Patent Literature 5.

Thus, an object of the present invention is to provide a method for producing an aqueous solution of an N-vinyl carboxylic acid amide copolymer which has excellent hydrophilicity, as well as excellent affinity for hydrophobic materials such as resin as well.

Solution to Problem

Under such circumstances, the present inventors devoted themselves to study. As a result, they found that a thickening property is significantly increased via drop polymerization of an N-vinyl carboxylic acid amide which is a water-soluble macromolecule and a specific non-hydrophilic monomer under given conditions, and thereby completed the present invention.

The features of the present invention are as described below.

[1] A method for producing an aqueous solution of an N-vinyl carboxylic acid amide copolymer, characterized in that

a liquid containing at least a non-hydrophilic monomer (B) which is at least one selected from acrylonitrile and methyl acrylate, and
a liquid containing at least a polymerization initiator (D)
are added dropwise to an aqueous solution of an N-vinyl carboxylic acid amide monomer (A) to effectuate polymerization.

[2] The method for producing an aqueous solution of an N-vinyl carboxylic acid amide copolymer [1], in which

the liquid containing at least a non-hydrophilic monomer (B) which is at least one selected from acrylonitrile and methyl acrylate, and
the liquid containing at least a polymerization initiator (D) are in one liquid.

[3] The method for producing an aqueous solution of an N-vinyl carboxylic acid amide copolymer [1], in which

the liquid containing at least a non-hydrophilic monomer (B) which is at least one selected from acrylonitrile and methyl acrylate, and
the liquid containing at least a polymerization initiator (D) are separately added dropwise at the same time.

[4] The method for producing an aqueous solution of an N-vinyl carboxylic acid amide copolymer according to any one of [1] to [3], in which at least one of the liquid containing at least a non-hydrophilic monomer (B) which is at least one selected from acrylonitrile and methyl acrylate, and the liquid containing at least a polymerization initiator (D) contains the N-vinyl carboxylic acid amide monomer (A) and water (C).

[5] The method for producing an aqueous solution of an N-vinyl carboxylic acid amide copolymer according to any one of [1] to [4], in which the N-vinyl carboxylic acid amide monomer (A) is N-vinylacetamide.

[6] The method for producing an aqueous solution of an N-vinyl carboxylic acid amide copolymer according to any one of [1] to [5], in which the amount of the N-vinyl carboxylic acid amide monomer (A) is 30 mol % or higher and 95 mol % or lower relative to the sum of the amounts of the N-vinyl carboxylic acid amide monomer (A), and the non-hydrophilic monomer (B) which is at least one selected from acrylonitrile and methyl acrylate of 100 mol %.

Advantageous Effects of Invention

The present invention is capable of providing a method for producing a highly viscous aqueous solution of an N-vinyl carboxylic acid amide copolymer. The aqueous solution has great effects of thickening water and enables significantly increased affinity for hydrophobic materials.

Copolymers produced by the method according to the present invention are usable in a wide range of fields including thickeners or coating agents for water paint, ink, and coatings, as well as for fiber, adhesives, and slurries for secondary batteries, by utilizing their properties of having high viscosity and high amphiphilicity, without ionic properties.

Brief Description of Drawing

[Fig. 1] A schematical view for describing contact angle measurement.

Description of Embodiments

An embodiment of the present invention is described in detail.

Components used in the method for producing an aqueous solution of an N-vinyl carboxylic acid amide copolymer of the present embodiment are described below.

An aqueous solution of an N-vinyl carboxylic acid amide copolymer (E) comprises an N-vinyl carboxylic acid amide monomer (A), a non-hydrophilic monomer (B) which is at least one selected from acrylonitrile and methyl acrylate (this may be hereinafter referred to as a non-hydrophilic monomer (B)), water (C), and a polymerization initiator (D), and is prepared by drop polymerization. Agents such as a chain transfer agent may also be contained for the purpose of adjusting molecular weight.

N-vinyl carboxylic acid amide monomer (A)

An N-vinyl carboxylic acid amide monomer (A) is represented by the following formula (1):

[Chemical formula 1]

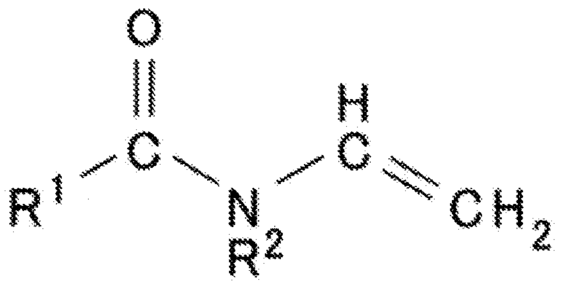

・・(1)

(wherein $R^1$ is a hydrogen atom or a hydrocarbon group having 1 to 6 carbon atoms; $R^2$ is a hydrogen atom or a hydrocarbon group having 1 to 6 carbon atoms; $R^1$ may form a ring structure with $NR^2$; and preferred $R^1$ is a hydrogen atom or a methyl group and preferred $R^2$ is a hydrogen atom).

Specific examples of N-vinyl carboxylic acid amides are N-vinylformamide, N-vinylacetamide, N-vinylpropionamide, N-vinylbenzamide, N-vinyl-N-methylformamide, N-vinyl-N-ethylformamide, N-vinyl-N-methylacetamide, N-vinyl-N-ethylacetamide, and N-vinylpyrrolidone. Among the above, N-vinylacetamide is particularly preferred. N-vinyl carboxylic acid amides may be used alone or in combination of 2 or more thereof.

Non-hydrophilic monomer (B)

A non-hydrophilic monomer (B) is at least one selected from acrylonitrile and methyl acrylate.

Water (C)

Water is not particularly limited and distilled water, ion exchange water, or tap water may be used, for example. Ion exchange water is preferred.

Polymerization initiator (D)

As polymerization initiators (D), those generally used in radical polymerization of vinyl compounds may be used without restriction. For example, redox polymerization initiators, azo compound-based polymerization initiators, and peroxide-based polymerization initiators are usable.

The above may be used alone or in combination of 2 or more thereof. If appropriate, a chain transfer agent may be used to adjust molecular weight.

Examples of redox polymerization initiators are combinations of ammonium persulfate with sodium thiosulfate, sodium hydrogenthiosulfate, trimethylamine, or tetramethylethylenediamine, and combinations of t-butyl hydroperoxide with sodium thiosulfate or sodium hydrogenthiosulfate.

Examples of peroxide-based polymerization initiators are persulfates of sodium, potassium, and ammonium,

and organic peroxides such as benzoyl peroxide, lauroyl peroxide, caproyl peroxide, t-butylperoctoate, and diacetyl peroxide.

Examples of azo compound-based polymerization initiators are azo compounds such as 2,2'-azobis(2-methylbutyronitrile), 2,2'-azobis(2,4-dimethylvaleronitrile), dimethyl-2,2'-azobis(isobutyrate), dimethyl-2,2'-azobis(2-methylbutyrate), dimethyl-2,2'-azobis(2,4-dimethylpentanoate), 2,2'-azobis(2-amidinopropane)dihydrochloride, 2,2'-azobis[N-(2-carboxyethyl)-2-methylpropionamidine]n hydrate, 2,2'-azobis{2-[N-(2-carboxyethyl)amidino]propane}n hydrate, and 2,2'-azobis(2-methylpropionic acid)dimethyl.

Among the above polymerization initiators, water-soluble ones are preferred due to water being used as a solvent. When the influences of residues on polymers are considered, halogen-free 2,2'-azobis[N-(carboxyethyl)-2-methylpropionamidine]tetrahydrate (product name: VA-057, azo compound-based polymerization initiator, produced by FUJIFILM Wako Pure Chemical Corporation) is most preferably used.

Polymerization initiators dissolved in water such as ion exchange water are preferably used.

The above radical polymerization initiators may be used simultaneously. Polymerization is also performable by using a redox polymerization initiator and a water-soluble azo compound-based polymerization initiator simultaneously.

In such a case, a combination of ammonium persulfate and sodium thiosulfate as a redox polymerization initiator, and 2,2'-azobis(2-amidinopropane)dihydrochloride as a water-soluble azo compound-based polymerization initiator are preferably used.

The amount of radical polymerization initiators to be used is, in the case of an azo compound-based polymerization initiator, preferably 0.05 parts by mass or higher and 2.0 parts by mass or lower, more preferably 0.1 parts by mass or higher and 0.8 parts by mass or lower, and still more preferably 0.4 parts by mass or higher and 0.7 parts by mass or lower relative to the total amount of all the monomers of 100 parts by mass. In the case of a redox polymerization initiator, the amount is preferably 0.001 parts by mass or higher and 0.03 parts by mass or lower, more preferably 0.003 parts by mass or higher and 0.01 parts by mass or lower, and still more preferably 0.004 parts by mass or higher and 0.009 parts by mass or lower relative to the total amount of all the monomers of 100 parts by mass. When the amount of a radical polymerization initiator is within the above range, both the polymerization rate and the molecular weight of copolymers tend to be suitable.

A chain transfer agent may be used during polymerization in order to adjust the degree of polymerization of a polymer or to introduce a modifying group into an end of a polymer, as long as the object of the present invention is not lost. Examples of chain transfer agents are aldehyde compounds such as propionaldehyde, ketone compounds such as acetone and methyl ethyl ketone, thiol compounds such as 2-hydroxyethanethiol, 3-mercaptopropionic acid, dodecanethiol, and thioacetic acid, halogenated hydrocarbon compounds such as carbon tetrachloride, trichloroethylene, and tetrachloroethylene, and phosphinic acid salts such as sodium phosphinate monohydrate. Among the above, thiol compounds, aldehyde compounds, and ketone compounds are preferably used. The amount of a chain transfer agent to be added is, relative to the total amount of all the monomers of 100 parts by mass, preferably 0.1 parts by mass or higher and 2.0 parts by mass or lower. When the amount of a chain transfer agent is within the above range, the purposes such as adjusting the degree of polymerization and introducing a modifying group into an end of a polymer are sufficiently achievable.

<u>Aqueous solution of N-vinyl carboxylic acid amide copolymer (E)</u>

An aqueous solution of N-vinyl carboxylic acid amide copolymer (E) is obtained via polymerization by adding at least a non-hydrophilic monomer (B) and a polymerization initiator (D) dropwise to a solution of an N-vinyl carboxylic acid amide monomer (A) and water (C). Since the polymerization rate of an N-vinyl carboxylic acid amide monomer (A) is lower than that of a non-hydrophilic monomer (B), polymerization of non-hydrophilic monomers (B) alone is supposed to be prevented by performing drop polymerization.

With respect to the ratio of an N-vinyl carboxylic acid amide monomer (A) to a non-hydrophilic monomer (B), the ratio of an N-vinyl carboxylic acid amide monomer (A) is preferably 30 mol % or higher and 95 mol % or lower, more preferably 35 mol % or higher and 90 mol % or lower, still more preferably 45 mol % or higher and 85 mol % or lower, and most preferably 50 mol % or higher and 85 mol % or lower. When the ratio is within the above range, an aqueous solution of an N-vinyl carboxylic acid amide copolymer (E) with excellent thickening properties is obtainable. When multiple types of N-vinyl carboxylic acid amide monomers (A) and non-hydrophilic monomers (B) are used, the above ratio is based on the total amount of each of the components.

In addition to N-vinyl carboxylic acid amide monomers (A) and non-hydrophilic monomers (B), copolymerizable monomer components may also be contained.

Examples of the copolymerizable monomers are vinyl sulfonic acid and salts thereof; allyl sulfonic acid, methallyl sulfonic acid, and allyl phosphoric acid, and salts thereof; N-methacryl-$\alpha$-amino acids and salts thereof; 2-acrylamide-n-butane sulfonic acid, 2-acrylamide-n-propane sulfonic acid, 2-acrylamide-n-hexane sulfonic acid, 2-acrylamide-n-octane sulfonic acid, 2-acrylamide-2,4,4-trimethylpentane sulfonic acid, 2-acrylamide-1-methylpropane sulfonic acid, 2-acrylamide-2-methylpropane sulfonic acid, 3-acrylamide-3-methylbutane sulfonic acid, and salts thereof; vinylacetate, allyl alcohol, and methallyl alcohol; methacrylonitrile; ethyl acrylate, n-propyl acrylate, isopropyl acrylate, n-butyl acrylate, isobutyl acrylate, t-butyl acrylate, ethylhexyl acrylate, hydroxyethyl acrylate, hydroxypropyl acrylate, hydroxybutyl acrylate, methyl methacrylate, ethyl methacrylate, n-propyl methacrylate, isopropyl methacrylate, n-butyl methacrylate, isobutyl methacrylate, t-butyl methacrylate, hydroxyethyl methacrylate, hydroxypropyl methacrylate, hydroxybutyl methacrylate, methyl crotonate, ethyl crotonate, and t-butyl crotonate; dimethylaminoethyl acrylate, diethylaminoethyl acrylate, dimethylaminoethyl methacrylate, diethylaminoethyl methacrylate, and quaternary salts thereof; diethylene glycol ethoxy acrylate, 2-ethoxyethyl acrylate, methoxy polyethylene glycol methacrylate #200, methoxy polyethylene glycol methacrylate #400, and methoxy polyethylene glycol methacrylate #1000; acrylamide, methacrylamide, N-methylacrylamide, N-ethylacrylamide, N-n-propylacrylamide, N-i-propylacrylamide, N-n-butylacrylamide, N-i-butylacrylamide, N-t-butylacrylamide, N-methylolacrylamide, N-allylacrylamide, N-methylmethacrylamide, N-ethylmethacrylamide, N-n-propylmethacrylamide, N-i-propylmethacrylamide, N-n-butylmethacrylamide, N-i-butylmethacrylamide, N-t-butylmethacrylamide, N-methylolmethacrylamide, N-allylmethacrylamide, N,N-dimethylacrylamide, N,N-diethylacrylamide, N,N-diisopropylacrylamide, and N,N-di-n-butylacrylamide; N,N-dimethylaminoethyl acrylamide, N,N-dimethylaminoethyl methacrylamide, N,N-dimethylaminopropyl acrylamide, and N,N-dimethylaminopropyl methacrylamide; and N-vinylpyrrolidone, N-vinyl-3-methylpyrrolidone, N-vinyl-5-methylpyrrolidone, N-vinyl-3,3,5-trimethylpyrrolidone, N-vinylpiperidone, N-vinylcaprolactam, and N-vinylcapryllactam. According to the present invention, the above monomers being copolymerizable with N-vinyl carboxylic acid amides may be used alone or in combination of 2 or more thereof.

With respect to the ratio of the sum of an N-vinyl carboxylic acid amide monomer (A) and a non-hydrophilic monomer (B) to a copolymerizable monomer, the ratio of the sum of (A) and (B) is preferably 60 mol % or higher and 100 mol % or lower, more preferably 70 mol % or higher and 95 mol % or lower, and still more preferably 80 mol % or higher and 95 mol % or lower.

The amount of water (C) is, relative to the sum of an N-vinyl carboxylic acid amide monomer (A) and a non-hydrophilic monomer (B) of 100 parts by mass, preferably 360 parts by mass or higher and 5,000 parts by mass or lower, more preferably 535 parts by mass or higher and 3,366 parts by mass or lower, and still more preferably 1,060 parts by mass or higher and 2,550 parts by mass or lower. The amount of water (C) within the above range is preferred since obtained copolymers are dispersible in water.

During drop polymerization, a liquid containing at least a non-hydrophilic monomer (B) and a liquid containing at least a polymerization initiator (D) (dropping aqueous solutions (or aqueous dispersions)) are added dropwise to a solution of an N-vinyl carboxylic acid amide monomer (A) and water (C). The liquid containing at least a non-hydrophilic monomer (B) and the liquid containing at least a polymerization initiator (D) are mixed into a single liquid, which is added dropwise, or the 2 liquids are added dropwise separately at the same time. A non-hydrophilic monomer (B) and a polymerization initiator (D) are preferably added dropwise in the form of an aqueous solution or an aqueous dispersion. The dropping aqueous solution (or aqueous dispersion) preferably contains a part of the N-vinyl carboxylic acid amide monomer (A) in addition to the non-hydrophilic monomer (B). The expression "at the same time" means a state in which the 2 liquids are added without error during the dropping thereof, specifically, a state in which a time lag at the initiation of or during the dropping is tolerated, and the addition of the 2 liquids is ultimately completed at the time when the dropping is finished.

The N-vinyl carboxylic acid amide monomer (A) also contained in the dropping aqueous solution increases the affinity of the non-hydrophilic monomer (B) for water (C), and a homogeneous aqueous solution is obtainable. In this case, the amount of the N-vinyl carboxylic acid amide monomer (A) contained in the dropping aqueous solution relative to the entirety of the N-vinyl carboxylic acid amide monomer (A) is preferably 1 % by mass or higher and 80 % by mass or lower, more preferably 10 % by mass or higher and 70 % by mass or lower, and still more preferably 20 % by mass or higher and 60 % by mass or lower.

The temperature of a polymerization initiator (D) during the dropping is preferably a temperature at which the liquid containing at least a polymerization initiator (D) does not substantially decompose. The liquid containing at least the polymerization initiator (D) during the dropping is preferably maintained for example at a temperature of 5 °C or higher and 25 °C or lower, though it depends on the decomposition temperature of the polymerization initiator (D) .

The drop time during polymerization is preferably 1.0 hour or longer and 4.0 hours or shorter, more preferably 1.3 hours or longer and 2.7 hours or shorter, and still more preferably 1.5 hours or longer and 2.5 hours or shorter, though it depends on polymerization temperature. When the drop time is the lower limit of the above range or longer, there is a reduced possibility that the same monomers are adjacent, resulting in the obtainment of a copolymer in which the same monomers are not blocked. When the drop time is the upper limit of the above range or shorter, good productivity is achieved.

The temperature of the solution of an N-vinyl carboxylic acid amide monomer (A) and water (C) at the time when the polymerization initiator is added is preferably 35 °C or higher and 85 °C or lower, more preferably 40 °C or higher and 75 °C or lower, and still more preferably 45 °C or higher and 70 °C or lower, though it depends on the

decomposition temperature of the polymerization initiator. When the temperature of the solution at which a polymerization initiator is added is the lower limit of the above range or higher, an appropriate reaction rate is obtained, and good productivity is achieved. When the temperature of the solution at which the polymerization initiator is added is the upper limit of the above range or lower, heat generation is suppressed, enabling stable production.

The temperature at which dropping is performed is preferably 35 °C or higher and 85 °C or lower, more preferably 40 °C or higher and lower than 75 °C, and still more preferably 45 °C or higher and 70 °C or lower. When the temperature at which dropping is performed is the lower limit of the above range or higher, an appropriate reaction rate is obtained and good productivity is achieved. When the temperature at which dropping is performed is the lower limit of the above range or higher, heat generation is suppressed, enabling stable production.

Polymerization is preferably performed in an inert gas atmosphere. Examples of inert gases are nitrogen gas and rare gas, and among them, a nitrogen gas atmosphere is preferred from the viewpoint of productivity.

The weight average molecular weight of an N-vinyl carboxylic acid amide copolymer produced in the present invention is preferably within a range of 10,000 or higher and 4,000,000 or lower, more preferably 100,000 or higher and 3,000,000 or lower, and still more preferably 500,000 or higher and 2,000,000 or lower. The weight average molecular weight herein mentioned is determined by the GPC measurement method described later.

With respect to the viscosity, the viscosity of an aqueous solution in which a copolymer is dissolved in water in a concentration of 5 % by mass is preferably 1,000 mPa·s or higher and 30,000 mPa·s or lower, more preferably 3,000 mPa·s or higher and 20,000 mPa·s or lower, and still more preferably 6,000 mPa·s or higher and 15,000 mPa·s or lower. The viscosity is determined by the viscosity measurement method described later.

Aqueous solutions of polymers having the above properties are viscous liquids having thixotropic and sliding properties.

With respect to an aqueous solution of an N-vinyl carboxylic acid amide copolymer (E), the concentration of the copolymer is appropriately selected depending on applications for which the composition is used, methods for applying the composition, and the viscosity of coating liquids, for example. It is ordinarily desirable that relative to the total mass of the composition containing a solvent which contains at least water, the concentration of the copolymer is preferably within a range of 1 % by mass or higher and 30 % by mass or lower, more preferably 2 % by mass or higher and 20 % by mass or lower, and still more preferably 4 % by mass or higher and 15 % by mass or lower. The concentration within the above range enables application of a coating liquid by a publicly known printing means and quick drying as well.

As a solvent, water is used and a mixed solvent obtained by mixing water with an alcohol is also usable. When an alcohol is mixed, the alcohol is contained in an amount of 50 % by mass or lower in a solvent. In terms of cost, production management and waste treatment, water alone is preferably used.

Examples

The present invention is more specifically described based on the following examples, but it is not limited thereto.

<Solid concentration>

Solid concentration was calculated as described below.

Approximately 3.0 g of an aqueous solution of an N-vinyl carboxylic acid amide copolymer (E) was collected, put in an aluminum cup, smoothly and uniformly spread on the bottom part of the aluminum cup with a spoon, and was heated with a thermobalance (PM460, produced by Mettler Toledo K.K.) at a temperature of 140 °C for 90 minutes. The mass after cooling was measured and a solid concentration was measured by the following formula:

$$\text{Solid concentration (\% by mass)} = (M3 - M1) / (M2 - M1) \times 100$$

M1: Mass of the aluminum cup (g)
M2: Mass of the sample before drying + mass of the aluminum cup (g)
M3: Mass of the sample after drying + mass of the aluminum cup (g)

<Viscosity>

An aqueous solution of an N-vinyl carboxylic acid amide copolymer (E) was poured into a 300 mL tall beaker and was diluted with ion exchange water so as to have a solid concentration of 5 % by mass. The tall beaker was left at rest in a thermostat at a temperature of 20 °C for 12 hours or longer to achieve a state in which bubbles inside completely disappeared. Thereafter, the beaker was put in a thermostatic water vessel at a temperature adjusted to 20

°C, the sample temperature was confirmed to be 20 ± 0.5 °C with a thermometer, and a viscosity was measured with a Brookfield viscometer as specified in JIS K-7117-1-1999 under the conditions below. The viscosity after 10 minutes from the viscometer installation was recorded.

(1) Aqueous solution of N-vinyl carboxylic acid amide copolymer (E) having 5,000 mPa·s or higher at 10 rpm

Viscometer: DVE (Brookfield) viscometer HA Model
Spindle: No. 6 spindle
Number of revolutions: 50 rpm
Temperature: 20 °C

(2) Aqueous solution of N-vinyl carboxylic acid amide copolymer (E) having lower than 5,000 mPa·s at 10 rpm

Viscometer: DVE (Brookfield) viscometer LV Model
Spindle: No. 4 spindle
Number of revolutions: 50 rpm
Temperature: 20 °C

<Appearance>

An aqueous solution of an N-vinyl carboxylic acid amide copolymer solution (E) was transferred to a colorless and transparent polypropylene bottle having a volume of 1 L, the bottle was left at rest in a thermostat at a temperature of 20 °C for 12 hours or longer, and the state was visually observed.

Two phase separation: Liquid phase separation was confirmed.
White fragment slurry: A slurry of white non-hydrophilic particle fragments was confirmed.
White aggregates: The formation of white aggregate materials was confirmed.
Cloudy: Overall cloudiness without phase separation was confirmed.
Slightly cloudy: Transparency to some extent without phase separation was observed, but a slightly opaque state was confirmed.
Gelatinized: A transparent but gelatinized state with little fluidity was confirmed.
Nearly gelatinized: A transparent and non-gelatinized state with poor fluidity was confirmed.
Transparent: A colorless and transparent state with an appropriate viscosity and fluidity as well, with no phase separation was confirmed.

<Polymerization ratio>

Polymerization ratio was calculated based on the following formula:

Polymerization ratio (%) = solid concentration (% by mass) / feed monomer concentration (% by mass) × 100

The feed monomer concentration was calculated as described below:
Dividing the mass of all the monomer components such as an N-vinyl carboxylic acid amide monomer (A), and a non-hydrophilic monomer (B) by the mass of a reaction liquid at the time when dropping is completed, and multiplying the obtained value by 100.

<TI value>

TI (thixotropic index) values are calculated based on the following formula.

TI value = viscosity (mPa·s) at a number of revolutions of 10 rpm / viscosity (mPa·s) at a number of revolutions of 100 rpm

An aqueous solution of an N-vinyl carboxylic acid amide copolymer (E) in an amount of 300 g was poured into a 500 mL tall beaker and was left at rest in a thermostat at a temperature of 20 °C for 12 hours or longer to achieve a state in which bubbles inside completely disappeared. The beaker was thereafter put in a thermostatic water vessel at a temperature adjusted to 20 °C, the sample temperature was confirmed to be 20 ± 0.5 °C with a thermometer, and the

viscosity was measured with a Brookfield viscometer described in JIS K-7117-1-1999 under the conditions below. The viscosity after 10 minutes from the viscometer installation was recorded.

(1) An aqueous solution of an N-vinyl carboxylic acid amide copolymer (E) having a viscosity of 5,000 mPa·s or higher at 10 rpm

Viscometer: DVE (Brookfield) viscometer HA Model
Spindle: No. 6 spindle
Number of revolutions: 10, 100 rpm
Temperature: 20 °C

(2) An aqueous solution of an N-vinyl carboxylic acid amide copolymer (E) having a viscosity lower than 5,000 mPa·s at 10 rpm

Viscometer: DVE (Brookfield) viscometer LV Model
Spindle: No. 4 spindle
Number of revolutions: 10, 100 rpm
Temperature: 20 °C

<Contact angle>

An aqueous solution of an N-vinyl carboxylic acid amide copolymer (E) was diluted with ion exchange water so as to have a solid concentration of 0.05 % by mass, and thereby 100 g of a liquid in total was obtained. The liquid was left at rest in a thermostat at a temperature of 20 °C for 24 hours, and thereafter contact angles relative to surfaces of materials (1) and (2) below were measured by the sessile drop method specified by JIS-R3257:1999:

(1) Glass plate
(2) Polypropylene sheet

Measurement device used: (FACE) contact angle meter CA-DT, produced by Kyowa Interface Science, Co., Ltd.
A contact angle was calculated based on the following formula:

$$\text{Contact angle } \theta\ (°) = 2 \times \arctan (h/a)$$

h: Apex height
a: Droplet radius

The schematical view of the contact angle measurement is shown in Fig. 1.

<Coating properties>

Slurry preparation

1) An aqueous solution of an N-vinyl carboxylic acid amide copolymer (E) was diluted with ion exchange water so as to have a solid concentration of 2 % by mass. To 30.0 g of the obtained solution, 57.9 g of SCMG®-XR-S (produced by Showa Denko K.K.) which is an artificial graphite powder was added, and this was mixed in a planetary centrifugal kneader (ARE-250, produced by Thinky Corporation) at 23 °C under the conditions of mixing for 60 seconds and defoaming for 60 seconds to give a graphite slurry.
2) An aqueous solution of an N-vinyl carboxylic acid amide copolymer (E) was diluted with ion exchange water so as to have a solid concentration of 2 % by mass. To 30.0 g of the obtained solution, 60.0 g of an alumina powder AL-160SG-3 (produced by Showa Denko K.K.) was added, and this was mixed in a planetary centrifugal kneader (ARE-250, produced by Thinky Corporation) at 23 °C under the conditions of mixing for 60 seconds and defoaming for 60 seconds to give an alumina slurry.

Coating property evaluation

The slurry obtained in the above 1) in an amount of 5 g was put on a polypropylene sheet (width 10 cm x length 30 cm, thickness: 30 pm) fixed on a painting stand of an auto film applicator (PI-1210, produced by Tester Sangyo Co., Ltd.) with double-sided tape, and was applied thereon in a length of 300 mm at a rate of 50 mm/second, using a bar coater (produced by Yoshimitsu Seiki K.K., width: 70 mm, thickness: 50 pm) .

The alumina slurry obtained in the above 2) was also subjected to the same operation and a polypropylene sheet on which the alumina slurry was applied was obtained.

The coating states of the coating sheets obtained in 1) and 2) were evaluated based on the following criteria:

A: Overall uniform coating surface with gloss was observed
B: Overall uniform coating surface without gloss was observed
C: No remarkable aggregates were observed, but thin spots or pinholes with a diameter of 3 mm or less were observed in an area of 10 % or smaller of the coating surface (70 mm x 300 mm) .
D: Many aggregates with a diameter of 3 mm or more were observed in an area of 10 % or more of the coating surface, and 10 % or more of the surface on which coating was performed was barely coated.

<Dispersibility>

A polypropylene sheet prepared for the coating property evaluation was dried in a nitrogen gas inert oven at a temperature of 80 °C for 12 hours. The sheet was visually observed with a microscope (VHX-5000, produced by Keyence Corporation) with a magnification of 200, and was evaluated for the dispersion states of graphite and alumina based on the following criteria:

A: A uniform dispersion state without aggregates was observed.
B: No remarkable aggregates were observed, but a slightly non-uniform dispersion state including fine lumps having diameters of 10 μm or more and less than 20 μm was observed.
C: Middle-sized aggregates having diameters of 20 μm or more and less than 50 μm were observed.
D: Many large aggregates having diameters of 50 μm or more were observed.

<Bondability>

(Bondability test on polypropylene sheet)

Onto a test sample (2 cm x 10 cm x 0.5 mm) of a polypropylene sheet (Torayfan® 3301, produced by Toray Industries, Inc.), 1.0 g of a solution obtained by diluting an aqueous solution of an N-vinyl carboxylic acid amide copolymer (E) with ion exchange water such that the aqueous solution (E) had solid concentration of 5.0 % by mass, was uniformly applied with a bar coater (produced by Yoshimitsu Seiki K.K., width: 20 mm, thickness: 50 μm).

An uncoated polypropylene sheet was laminated on the coated polypropylene sheet, and was tightly adhered thereto by rolling a transfer roll weighing 1 kg back-and-forth 5 times.

The obtained tightly adhered laminate sheet was dried in a hot wind dryer at a temperature of 100 °C for 10 hours. The dried test sample was subjected to a T-peel test specified by JIS K 6854-3:1999 using Tensilon (PTM-100, produced by Orientec Co., Ltd.) at a rate of 500 mm/min. Peel strength was measured three times, and the maximum values of the measurements were averaged to evaluate bondability.

(Bondability test on aluminum foil)

Except for using an aluminum foil test sample (LUXAL® 1000AL, produced by Toyo Aluminium K.K.) instead of a polypropylene sheet, the same operation as performed in the polypropylene sheet bondability test was performed.

<Remaining monomer concentration>

A sample of an aqueous solution of an N-vinyl carboxylic acid amide copolymer (E) was dissolved in an aqueous solution of sodium sulfate ($Na_2SO_4$) having a concentration of 0.05 mol/L to obtain a solution containing 0.1 % by mass of (E). The obtained solution was analyzed by a GPC method and the concentration of monomers remaining in the polymer sample (remaining monomer concentration) was calculated. By referring to the remaining monomer concentration, the completion of a polymerization reaction can be confirmed.

Detector (RI): SHODEX® UV-41, produced by Showa Denko K.K.
Pump: SHODEX® DS-4, produced by Showa Denko K.K.
Column heater: U-620 (40 °C), produced by Sugai
Analyzer: C-R7A Plus, produced by Shimadzu Corporation
Column: SHODEX® SB-802.5HQx1, produced by Showa Denko K.K.
Eluant: 0.5 mol/L aqueous $Na_2SO_4$ solution, flow rate 1.0 mL/min.

The concentration was obtained by a calibration curve method (sample concentration: 1, 5, 10, or 100 ppm by mass).

<Example 1>

A 4-necked 1L separable flask was equipped with a nitrogen gas feed tube, a stirrer, a solvent dropping device, and a thermometer, and 145 g of ion exchange water and 16.0 g of N-vinylacetamide (produced by Showa Denko K.K.) were fed into the separable flask. The solution was stirred at 51 °C for 30 minutes while performing nitrogen gas replacement in the solution to prepare an aqueous solution of N-vinylacetamide. A dispersion was prepared by dispersing 10.0 g of acrylonitrile (produced by Tokyo Chemical Industry, Co., Ltd.), 0.3 g (ratio to monomers in total: 0.6 % by mass) of a polymerization initiator 2,2'-azobis[N-(carboxyethyl)-2-methylpropionamidine]tetrahydrate (hereinafter referred to as VA-057, produced by FUJIFILM Wako Pure Chemical Corporation), and 24.0 g of N-vinylacetamide in 270 g of ion exchange water having undergone a nitrogen gas deaeration treatment. The separable flask was maintained at a temperature of 51 °C, and the obtained dispersion was added dropwise from the solvent dropping device to the separable flask with a pump for 2 hours. After the dropping, the solution was maintained at a temperature of 51 °C for 2 hours, thereafter maintained at 75 °C for 1 hour, and was then sampled. By confirming that the concentration of remaining N-vinylacetamide monomers was 1,000 ppm by mass or lower, the reaction was determined to be completed.

<Examples 2 to 10, Comparative Examples 1 to 3, and 17 to 22>

The same operation as described in Example 1 was performed except for using the reagents and feed amounts described in Tables 1, 2, and 3. In all the examples and comparative examples, the ratio of an N-vinyl carboxylic acid amide monomer (A) contained in the dispersion to be added dropwise to that contained in the solution in the flask was 6 : 4 in terms of mass.

<Comparative Example 4>

A 4-necked 1L separable flask was equipped with a nitrogen gas feed tube, a stirrer, and a thermometer, and 270 g of ion exchange water and 40 g of N-vinylacetamide were fed into the separable flask. In that state, the solution was stirred and heated while performing nitrogen gas replacement in the solution, and when the temperature achieved the polymerization initiation temperature of 51 °C, the entire amount of 20 g of acrylonitrile was fed at once from the above with a syringe. After 5 minutes, 0.3 g (ratio to monomers in total: 0.6 % by mass) of a polymerization initiator VA-057 was added with a syringe, the solution was maintained at a temperature of 51 °C for 4 hours and was thereafter further maintained at 75 °C for 1 hour, and then the solution was sampled. By confirming that the concentration of remaining monomers was 1,000 ppm by mass or lower, the reaction was determined to be completed.

<Comparative Examples 5 to 16>

The same operation as described in Comparative Example 4 was performed except for using the reagents and feed amounts described in Tables 2 and 3.

[Table 1]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| (A) | | N-vinylacetamide | | | | | | | | | |
| (B) | | Acrylonitrile | | | | | Methyl acrylate | | | | |
| (A) (% by mass) | | 80 | 70 | 60 | 50 | 40 | 80 | 70 | 60 | 50 | 40 |
| (B) (% by mass) | | 20 | 30 | 40 | 50 | 60 | 20 | 30 | 40 | 50 | 60 |
| (A) (mol %) | | 71.4 | 59.3 | 48.3 | 38.4 | 29.4 | 80.2 | 70.2 | 60.3 | 50.3 | 40.3 |
| (B) (mol %) | | 28.6 | 40.7 | 51.7 | 61.6 | 70.6 | 19.8 | 29.8 | 39.7 | 49.7 | 59.7 |
| Method of adding (B) | | Dropping | | | | | | | | | |
| Drop time (hr.) | | 2 | | | | | | | | | |
| Viscosity (mPa·s) | | 9,000 | 9,500 | 12,000 | 11,800 | 11,600 | 11,000 | 11,500 | 11,800 | 11,500 | 11,200 |
| Appearance | | Transparent | Slightly cloudy | Slightly cloudy | Slightly cloudy | Slightly cloudy | Transparent | Transparent | Transparent | Transparent | Transparent |
| Polymerization ratio (% by mass) | | 95.3 | 96.2 | 96.1 | 95.8 | 95.6 | 95.5 | 96.3 | 96.8 | 95.6 | 96.8 |
| | | Example 1 | Example 2 | Example 3 | Example 4 | Example 5 | Example 6 | Example 7 | Example 8 | Example 9 | Example 10 |
| TI value | η10/η100 | 3.1 | 3.5 | 3.9 | 3.5 | 3.4 | 3.6 | 3.8 | 4.1 | 4.2 | 4.3 |
| Contact angle (°) | PP | 59.8 | 57.5 | 54.3 | 51.8 | 50.9 | 58.8 | 53.2 | 49.5 | 48.5 | 47.7 |
| | Glass | 25.5 | 26.7 | 26.3 | 26.5 | 26.2 | 21.4 | 22.2 | 22.5 | 23.2 | 24.3 |
| Coating properties | Graphite | B | B | B | B | B | B | A | A | A | A |
| | Alumina | B | B | B | B | B | B | B | B | B | B |
| Dispersibility | Graphite | B | B | B | B | B | B | A | A | A | A |
| | Alumina | B | B | B | B | B | B | B | B | B | B |
| Bondability N/cm | PP | 11.3 | 12.3 | 15.8 | 16.1 | 16.7 | 12.5 | 14.8 | 17.8 | 18.5 | 19.1 |
| | Aluminum foil | 20.5 | 20.8 | 21.1 | 21.3 | 20.6 | 21.1 | 20.7 | 22.3 | 20.9 | 21.4 |

[Table 2]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| (A) | | | | N-vinylacetamide | | | | | | |
| (B) | | Acrylonitrile | Methyl acrylate | | Acrylonitrile | | | | | Methyl acrylate |
| (A) (% by mass) | | 0 | 0 | 100 | 80 | 70 | 60 | 50 | 40 | 80 |
| (B) (% by mass) | | 100 | 100 | 0 | 20 | 30 | 40 | 50 | 60 | 20 |
| (A) (mol %) | | 0 | 0 | 100 | 71.4 | 59.3 | 48.3 | 38.4 | 29.4 | 80.2 |
| (B) (mol %) | | 100 | 100 | 0 | 28.6 | 40.7 | 51.7 | 61.6 | 70.6 | 19.8 |
| Method of adding (B) | | Dropping | | | Feed at once | | | | | |
| Drop time (hr.) | | | 2 | | | | | | | |
| Viscosity (mPa·s) | | 25 | 32 | 5,800 | 5,800 | 56 | 28 | 33 | 28 | 7,500 |
| Appearance | | White fragment slurry | White fragment slurry | Transparent | Cloudy | Two phase separation | Two phase separation | Two phase separation | Two phase separation | Transparent |
| Polymerization ratio (% by mass) | | - | - | 84.9 | 77.4 | 71.7 | 66 | 64.2 | 60.4 | 79.2 |
| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
| TI value | η10/η100 | | | 3.5 | 2.8 | | | | | 4.9 |
| Contact angle (°) | PP | | | 65.1 | 71.2 | | | | | 69.5 |
| | Glass | | | 26.5 | 31.2 | | | | | 30.5 |
| Coating properties | Graphite | | | D | D | | | | | D |
| | Alumina | | | B | D | | | | | C |
| Dispersibility | Graphite | | | D | D | | | | | D |
| | Alumina | | | B | D | | | | | C |
| Bondability N/cm | PP | | | 5.8 | 5.5 | | | | | 4.9 |
| | Aluminum foil | | | 20.5 | 18.5 | | | | | 17.7 |

| | | Comparative Example 10 | Comparative Example 11 | Comparative Example 12 | Comparative Example 13 |
|---|---|---|---|---|---|
| (A) | | N-vinylacetamide | | | |
| (B) | | Methyl acrylate | | | |
| (A) (% by mass) | | 70 | 60 | 50 | 40 |
| (B) (% by mass) | | 30 | 40 | 50 | 60 |
| (A) (mol %) | | 70.2 | 60.3 | 50.3 | 40.3 |
| (B) (mol %) | | 29.8 | 39.7 | 49.7 | 59.7 |
| Method of adding (B) | | Feed at once | | | |
| Drop time (hr.) | | | | | |
| Viscosity (mPa·s) | | 11,000 | 12,500 | 16,400 | 21,000 |
| Appearance | | Transparent | Nearly gelatinized | Gelatinized | Gelatinized |
| Polymerization ratio (% by mass) | | 73.6 | 85.2 | 86.1 | 85.4 |
| | | Comparative Example 10 | Comparative Example 11 | Comparative Example 12 | Comparative Example 13 |
| TI value | η10/η100 | 5.2 | 6.5 | 6.8 | 7.1 |
| Contact angle (°) | PP | 68.8 | 65.5 | 64.3 | 62.2 |
| | Glass | 33.4 | 35.5 | 38.7 | 41.1 |
| Coating properties | Graphite | D | D | D | D |
| | Alumina | D | D | D | D |
| Dispersibility | Graphite | D | D | D | D |
| | Alumina | D | D | D | D |
| Bondability N/cm | PP | 5.1 | 5.1 | 5.5 | 5.4 |
| | Aluminum foil | 16.5 | 15.4 | 11.3 | 10.2 |

[Table 3]

| | | Comparative Example 14 | Comparative Example 15 | Comparative Example 16 | Comparative Example 17 | Comparative Example 18 | Comparative Example 19 | Comparative Example 20 | Comparative Example 21 | Comparative Example 22 |
|---|---|---|---|---|---|---|---|---|---|---|
| (A) | | | | N-vinylacetamide | | | | | | |
| (B) | | Acrylonitrile | Methyl acrylate | | BA | EA | EHA | Str | VA | MMA |
| (A) (% by mass) | | 0 | 0 | 100 | 80 | 80 | 80 | 80 | 80 | 80 |
| (B) (% by mass) | | 100 | 100 | 0 | 20 | 20 | 20 | 20 | 20 | 20 |
| (A) (mol %) | | 0 | 0 | 100 | 85.8 | 82.5 | 89.6 | 83.0 | 80.2 | 82.5 |
| (B) (mol %) | | 100 | 100 | 0 | 14.2 | 17.5 | 10.4 | 17.0 | 19.8 | 17.5 |
| Method of adding (B) | | Feed at once | | | Dropping | | | | | |
| Drop time (hr.) | | 2 | | | | | | | | |
| Viscosity (mPa·s) | | 18 | 21 | 10,000 | 18 | 21 | 33 | 36 | 45 | 56 |
| Appearance | | White aggregates | White aggregates | Transparent | White aggregates | White aggregates | Cloudy | White aggregates | Cloudy | White aggregates |
| Polymerization ratio (% by mass) | | 88.5 | 89.8 | 95.3 | 60.7 | 61.1 | 72.1 | 62.3 | 77.5 | 62.2 |
| | | Comparative Example 14 | Comparative Example 15 | Comparative Example 16 | Comparative Example 17 | Comparative Example 18 | Comparative Example 19 | Comparative Example 20 | Comparative Example 21 | Comparative Example 22 |
| TI value | η10/η100 | | | 2.8 | | | | | | |
| Contact angle (°) | PP | | | 64.8 | | | | | | |
| | Glass | | | 26.3 | | | | | | |
| Coating properties | Graphite | | | D | | | | | | |
| | Alumina | | | B | | | | | | |
| Dispersibility | Graphite | | | D | | | | | | |
| | Alumina | | | B | | | | | | |
| Bondability N/cm | PP | | | 3.2 | | | | | | |
| | Aluminum foil | | | 8.7 | | | | | | |

Reagents used are described below.

N-vinylacetamide: produced by Showa Denko K.K.
Acrylonitrile: produced by Tokyo Chemical Industry, Co., Ltd.
Methyl acrylate: produced by Tokyo Chemical Industry, Co., Ltd.
BA: butylacrylate, produced by Tokyo Chemical Industry, Co., Ltd.
EA: ethylacrylate, produced by Tokyo Chemical Industry, Co., Ltd.
EHA: ethylhexyl acrylate, produced by Tokyo Chemical Industry, Co., Ltd.
Str: styrene, produced by Tokyo Chemical Industry, Co., Ltd.
VA: vinylacetate, produced by FUJIFILM Wako Pure Chemical Corporation
MMA: methylmethacrylate, produced by Tokyo Chemical Industry, Co., Ltd.
2,2'-azobis[N-(carboxyethyl)-2-methylpropionamidine]tetrahydrate (VA-057): produced by FUJIFILM Wako Pure Chemical Corporation

Physical property evaluation results are summarized in the lower parts in Tables 1 to 3.

Comparisons between Comparative Example 1 and Examples 1 to 5, and between Comparative Example 2 and Examples 6 to 10 show that a (co)polymer appropriately dispersed in water is not polymerizable from hydrophilic monomers alone. For a part of the comparative examples in which a polymerization ratio was lower than 70 % or was unmeasurable, the TI values, contact angle, coating properties, dispersibility, and bondability were not measured.

A comparison between Comparative Example 3 and Examples 1 to 10 shows that when using an N-vinyl carboxylic acid amide (A) alone, dispersion in water is possible, but the coating properties or dispersibility of a graphite-containing slurry, and bondability to polypropylene or aluminum foil are inferior.

A comparison between Comparative Examples 4 to 13 and Examples 1 to 10 show that one-time-feed polymerization in which all the raw materials of the aqueous solution of an N-vinyl carboxylic acid amide copolymer (E) were added to the reaction liquid during polymerization results in exhibiting poor water dispersibility or inferior TI values, coating properties, dispersibility, bondability, or thickening properties.

## Claims

1. A method for producing an aqueous solution of an N-vinyl carboxylic acid amide copolymer, **characterized in that**

   a liquid containing at least a non-hydrophilic monomer (B) which is at least one selected from acrylonitrile and methyl acrylate, and
   a liquid containing at least a polymerization initiator (D)
   are added dropwise to an aqueous solution of an N-vinyl carboxylic acid amide monomer (A) to effectuate polymerization.

2. The method for producing an aqueous solution of an N-vinyl carboxylic acid amide copolymer according to Claim 1, wherein

   the liquid containing at least a non-hydrophilic monomer (B) which is at least one selected from acrylonitrile and methyl acrylate, and
   the liquid containing at least a polymerization initiator (D) are in one liquid..

3. The method for producing an aqueous solution of an N-vinyl carboxylic acid amide copolymer according to Claim 1, wherein

   the liquid containing at least a non-hydrophilic monomer (B) which is at least one selected from acrylonitrile and methyl acrylate, and
   the liquid containing at least a polymerization initiator (D) are separately added dropwise at the same time.

4. The method for producing an aqueous solution of an N-vinyl carboxylic acid amide copolymer according to any one of Claims 1 to 3, wherein at least one of the liquid containing at least a non-hydrophilic monomer (B) which is at least one selected from acrylonitrile and methyl acrylate, and the liquid containing at least a polymerization initiator (D) contains the N-vinyl carboxylic acid amide monomer (A) and water (C).

5. The method for producing an aqueous solution of an N-vinyl carboxylic acid amide copolymer according to any one

of Claims 1 to 4, wherein the N-vinyl carboxylic acid amide monomer (A) is N-vinylacetamide.

6. The method for producing an aqueous solution of an N-vinyl carboxylic acid amide copolymer according to any one of Claims 1 to 5, wherein the amount of the N-vinyl carboxylic acid amide monomer (A) is 30 mol % or higher and 95 mol % or lower relative to the sum of the amounts of the N-vinyl carboxylic acid amide monomer (A), and the non-hydrophilic monomer (B) which is at least one selected from acrylonitrile and methyl acrylate of 100 mol %.

## Patentansprüche

1. Verfahren zur Herstellung einer wässrigen Lösung eines N-Vinylcarbonsäureamid-Copolymers, **dadurch gekennzeichnet, dass**

   eine Flüssigkeit, die mindestens ein nicht hydrophiles Monomer (B) enthält, das mindestens eines ist, das aus Acrylnitril und Methylacrylat ausgewählt ist, und
   eine Flüssigkeit, die mindestens einen Polymerisationsinitiator (D) enthält,
   tropfenweise zu einer wässrigen Lösung eines N-Vinylcarbonsäureamidmonomers (A) gegeben, um die Polymerisation zu bewirken.

2. Verfahren zur Herstellung einer wässrigen Lösung eines N-Vinylcarbonsäureamid-Copolymers nach Anspruch 1, wobei

   die Flüssigkeit, die mindestens ein nicht hydrophiles Monomer (B) enthält, das mindestens eines ist, das aus Acrylnitril und Methylacrylat ausgewählt ist, und
   die mindestens einen Polymerisationsinitiator (D) enthaltende Flüssigkeit in einer Flüssigkeit vorliegen.

3. Verfahren zur Herstellung einer wässrigen Lösung eines N-Vinylcarbonsäureamid-Copolymers nach Anspruch 1, wobei

   die Flüssigkeit, die mindestens ein nicht hydrophiles Monomer (B) enthält, das mindestens eines ist, das aus Acrylnitril und Methylacrylat ausgewählt ist, und
   die mindestens einen Polymerisationsinitiator (D) enthaltende Flüssigkeit separat und gleichzeitig tropfenweise zugegeben werden.

4. Verfahren zur Herstellung einer wässrigen Lösung eines N-Vinylcarbonsäureamid-Copolymers nach einem der Ansprüche 1 bis 3, wobei mindestens eine der Flüssigkeit, die mindestens ein nicht hydrophiles Monomer (B) enthält, das mindestens eines ist, das aus Acrylnitril und Methylacrylat ausgewählt ist, und der mindestens einen Polymerisationsinitiator (D) enthaltenden Flüssigkeit das N-Vinylcarbonsäureamidmonomer (A) und Wasser (C) enthält.

5. Verfahren zur Herstellung einer wässrigen Lösung eines N-Vinylcarbonsäureamid-Copolymers nach einem der Ansprüche 1 bis 4, wobei das N-Vinylcarbonsäureamidmonomer (A) N-Vinylacetamid ist.

6. Verfahren zur Herstellung einer wässrigen Lösung eines N-Vinylcarbonsäureamid-Copolymers nach einem der Ansprüche 1 bis 5, wobei die Menge des N-Vinylcarbonsäureamidmonomers (A) 30 Mol-% oder mehr und 95 Mol-% oder weniger beträgt, bezogen auf die Summe der Mengen des N-Vinylcarbonsäureamidmonomers (A) und des nicht hydrophilen Monomers (B), das mindestens eines ist, ausgewählt aus Acrylnitril und Methylacrylat, die 100 Mol-% ist.

## Revendications

1. Procédé de production d'une solution aqueuse d'un copolymère d'amide d'acide N-vinylcarboxylique, **caractérisé en ce que**

   un liquide contenant au moins un monomère non hydrophile (B) qui est au moins un choisi parmi l'acrylonitrile et l'acrylate de méthyle, et
   un liquide contenant au moins un initiateur de polymérisation (D) sont ajoutés goutte à goutte à une solution aqueuse d'un monomère d'amide d'acide N-vinylcarboxylique (A) pour effectuer une polymérisation.

2. Procédé de production d'une solution aqueuse d'un copolymère d'amide d'acide N-vinylcarboxylique selon la revendication 1, dans lequel

le liquide contenant au moins un monomère non hydrophile (B) qui est au moins un choisi parmi l'acrylonitrile et l'acrylate de méthyle, et
le liquide contenant au moins un initiateur de polymérisation (D) sont dans un liquide.

3. Procédé de production d'une solution aqueuse d'un copolymère d'amide d'acide N-vinylcarboxylique selon la revendication 1, dans lequel

le liquide contenant au moins un monomère non hydrophile (B) qui est au moins un choisi parmi l'acrylonitrile et l'acrylate de méthyle, et
le liquide contenant au moins un initiateur de polymérisation (D) sont ajoutés séparément goutte à goutte en même temps.

4. Procédé de production d'une solution aqueuse d'un copolymère d'amide d'acide N-vinylcarboxylique selon l'une quelconque des revendications 1 à 3, dans lequel au moins l'un du liquide contenant au moins un monomère non hydrophile (B) qui est au moins un choisi parmi l'acrylonitrile et l'acrylate de méthyle, et du liquide contenant au moins un initiateur de polymérisation (D) contient le monomère d'amide d'acide N-vinylcarboxylique (A) et de l'eau (C).

5. Procédé de production d'une solution aqueuse d'un copolymère d'amide d'acide N-vinylcarboxylique selon l'une quelconque des revendications 1 à 4, dans lequel le monomère d'amide d'acide N-vinylcarboxylique (A) est du N-vinylacétamide.

6. Procédé de production d'une solution aqueuse d'un copolymère d'amide d'acide N-vinylcarboxylique selon l'une quelconque des revendications 1 à 5, dans lequel la quantité du monomère d'amide d'acide N-vinylcarboxylique (A) est de 30 % en moles ou supérieure et de 95 % en moles ou inférieure par rapport à la somme des quantités du monomère d'amide d'acide N-vinylcarboxylique (A), et du monomère non hydrophile (B) qui est au moins un choisi parmi l'acrylonitrile et l'acrylate de méthyle de 100 % en moles.

[Fig. 1]

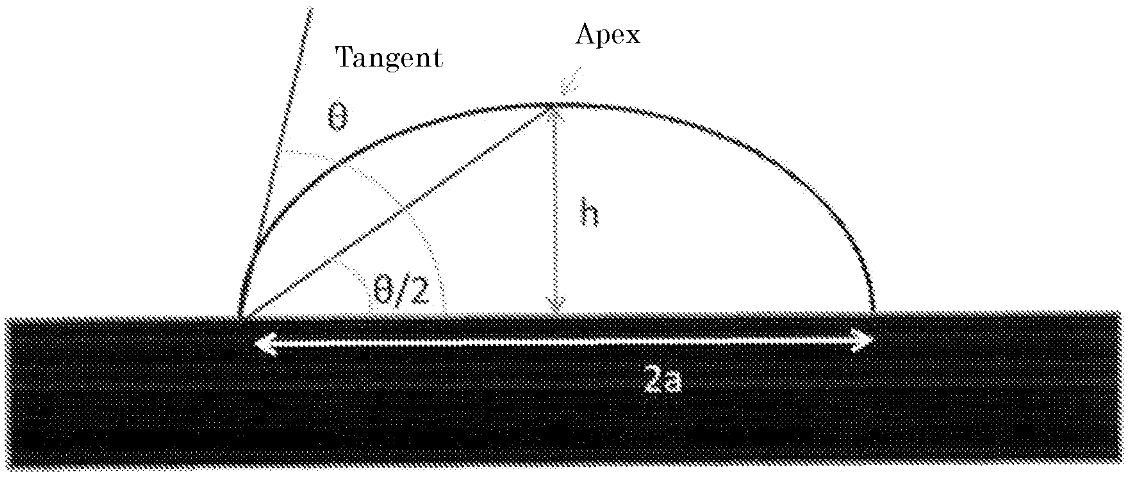

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3180659 B
- WO 2016181993 A1
- JP 3144087 B
- JP 2798736 B
- JP H08311385 A
- JP H09296013 A